# EUROPÄISCHE PATENTSCHRIFT

(11) **EP 0 778 310 B1**
(45) Veröffentlichungstag und Bekanntmachung des Hinweises auf die Patenterteilung: **18.09.2002**
(21) Anmeldenummer: 96119037.8
(22) Anmeldetag: 04.12.1996
(51) Int. Cl.: C08J 9/04, C08J 9/228, B29C 44/34, C08J 9/16

(54) **Verfahren zur Herstellung von Polyolefin-Schaumstoffpartikeln**
Process for producing polyolefin foam particles
Procédé de préparation de particules de mousse polyoléfinique

(30) Priorität: 04.12.1995 DE 19545098
(43) Veröffentlichungstag der Anmeldung: 11.06.1997
(73) Patentinhaber: BASF Aktiengesellschaft, 67063 Ludwigshafen (DE)
(72) Erfinder: Fischer, Joachim, Dr., 67229 Grosskarlbach (DE); Rieger, Jens, Dr., 67069 Ludwigshafen (DE); Hahn, Klaus, Dr., 67281 Kirchheim (DE); De Grave, Isidoor, Dr., 67157 Wachenheim (DE); Kögel, Wolfram, 68309 Mannheim (DE)

(56) Entgegenhaltungen:
- EP-A- 0 166 252
- EP-A- 0 256 489
- US-A- 3 973 884
- US-A- 4 978 723
- US-A- 5 114 640

## Beschreibung

Die Erfindung betrifft ein Verfahren zur Herstellung von Polyolefin-Schaumstoffpartikeln mit einer Schüttdichte von 20 bis 100 g·l⁻¹.

Polyolefin-Schaumstoffpartikel, insbesondere auf Basis eines Copolymeren des Propylens mit geringen Mengen Ethylen, werden in steigendem Maß zur Herstellung von Schaumstoff-Formteilen im Automobilbau, Verpackungswesen und Freizeitbereich eingesetzt. Die Schaumstoffteilchen werden üblicherweise hergestellt, indem man feinteiliges Polyolefingranulat in Wasser suspendiert, bei Temperaturen nahe der Erweichungstemperatur des Polyolefins unter Druck mit einem flüchtigen Treibmittel imprägniert, entspannt und dabei aufschäumt (siehe EP-A 53333). In den so hergestellten Schaumstoffteilchen hat das Polyolefin eine spezielle Kristallstruktur, die dadurch charakterisiert ist, daß es in einer DSC-Kurve eine für das Polyolefin charakteristische Spitze und eine Hochtemperaturspitze (sogen. "Doppelpeak") aufweist.

Man hat auch schon versucht, den Schäumprozeß in mehrere Stufen aufzuteilen, um auf diese Weise eine größere Flexibilität bei der Einstellung der gewünschten, dem jeweiligen Anwendungszweck angepaßten Schüttdichte zu erreichen.

So beschreibt die EP-A 108 245 ein Verfahren zur Herstellung von Polypropylen-Schaumstoffpartikeln, bei dem vorgeschäumten Partikeln durch Druckbehandlung Expandierbarkeit verliehen, und sie dann mit heißer Luft oder Wasserdampf nachgeschäumt werden. Die vorgeschäumten Partikel werden hergestellt durch Imprägnieren mit einem flüchtigen Treibmittel in wässriger Suspension und Entspannen. Ihr Expansionsgrad liegt nach den Beispielen zwischen 11 und 24, was einer Schüttdichte von 55 bis 25 g·l⁻¹ entspricht. Nach EP-A 166 252 werden Polyolefin-Schaumstoffpartikel in einem Zweistufenverfahren hergestellt. Dabei werden zuerst Nucleozellen enthaltende Partikel mit einem Expansionsgrad von 1,01 bis 2 durch Extrusion von zersetzbare Schäummittel enthaltendem Polyolefinharz hergestellt, dann werden diese Partikel in wässriger Suspension mit einem anorganischen Gas, vorzugsweise Luft oder Kohlendioxid unter Druck imprägniert und durch Entspannen verschäumt.

Allen diesen Verfahren haftet der Nachteil an, daß in wässriger Suspension gearbeitet wird. Dies bedingt einen hohen Energieverbrauch, weil große Mengen Wasser erhitzt werden müssen, es führt zu Abwasserproblemen, da die Suspension Stabilisatoren und andere Hilfsmittel enthält und erfordert schließlich einen aufwendigen Waschprozeß, da die Schaumstoffpartikel von anhaftenden Hilfsmitteln gereinigt werden müssen.

Der Erfindung lag also die Aufgabe zugrunde, einen Mehrstufenprozeß zur Herstellung von Polyolefin-Schaumstoffpartikeln zu entwickeln, bei dem das Arbeiten in wässriger Suspension vermieden werden kann. Die erhaltenen Schaumstoffpartikel sollten eine Kristallstruktur mit Doppelpeak aufweisen, was günstige Verarbeitungseigenschaften der Schaumstoffpartikel und gute mechanische Eigenschaften der daraus hergestellten Formteile zur Folge hat.

Gegenstand der Erfindung ist ein Verfahren zur Herstellung von Polyolefin-Schaumstoffpartikeln mit einer Schüttdichte von 20 bis 100 g·l⁻¹, bei dem man
A. zuerst angeschäumte Partikel mit einer Schüttdichte von 120 bis 400 g·l⁻¹ herstellt durch Extrusion bei Temperaturen zwischen 180° und 240°C und Verweilzeiten von 60 bis 500 sec. und Granulieren von Treibmittel enthaltendem Polyolefin, und dann
B. die angeschäumten Partikel in einer oder mehreren Stufen weiter aufschäumt, wobei die treibmittelfreien, angeschäumten Partikel ohne vorherige Druckbehandlung mit Wasserdampf von 1,5 bis 8,0 bar und einer Temperatur von 110 bis 170°C 5 bis 120 Sek. lang behandelt werden, und dann entspannt wird.

Für das Verfahren eignen sich Polyethylene niedriger, mittlerer und hoher Dichte zwischen 0,88 bis 0,965 g/cm³, Polypropylen sowie Ethylen- und Propylencopolymere, die mindestens 50 Mol.-% Ethylen- bzw. Propylen-Einheiten enthalten. Geeignete Comonomere sind beispielsweise α-Alkene mit bis zu 12 Kohlenstoffatomen, wie Ethylen, Propylen, Buten, Penten, Hexen, Octen, ferner Vinylester, wie Vinylacetat, Ester der Acrylsäure, Methacrylsäure, Maleinsäure oder Fumarsäure mit Alkoholen, die 1 bis 8 C-Atome enthalten, Copolymere aus Ethylen und Acrylsäure bzw. deren Derivaten, sowie Ionomeren. Auch Mischungen verschiedener Olefinpolymerisate können verwendet werden.

Bevorzugt eingesetzt werden Ethylen-Propylen-Copolymere und Copolymere von Ethylen und/oder Propylen mit einem C₄- bis C8-α-Olefin.

Besonders bevorzugte Propylen-Copolymere sind Copolymere des Propylens mit 0,5 bis 6 Gew.-% Ethylen oder 0,5 bis 15 Gew.-% Buten (1). Besonders bevorzugte Ethylen-Copolymere sind Copolymere des Ethylens mit 1 bis 18 Gew.-% Buten (1), Hexen (1) oder Octen (1).

Besonders bevorzugt sind auch Copolymere von Propylen mit 0,5 bis 6 Gew.-%, vorzugsweise 1,5 bis 6 Gew.-% Ethylen und 0,5 bis 6 Gew.-%, vorzugsweise 1,5 bis 6 Gew.-% eines C₄- bis C₈-α-Olefins, wie Buten-1, Penten-1, Hexen-1, Hepten-1 oder Octen-1. Die Copolymeren sollen einen G-Modul von 100 bis 900, vorzugsweise 150 bis 750 N/mm² aufweisen.

Die Herstellung der Copolymeren erfolgt in bekannter Weise durch Copolymerisation der Monomeren mittels Übergangsmetallkatalysatoren. Die Copolymeren sind im allgemeinen linear aufgebaut, unvernetzt und nicht schmelzeverfestigt. Der Kristallitschmelzpunkt, bestimmt nach der DSC-Methode, liegt im allgemeinen zwischen 95 und 170°C. Die Schmelzwärme, bestimmt nach der DSC-Methode, liegt im allgemeinen zwischen 30 und 130 J/g, vorzugsweise zwischen 35 und 120 J/g. Vorzugsweise werden Copolymere mit einem Schmelzindex MFI (230; 2,16) (nach DIN 53 735) von 0,1 bis 50, insbesondere 0,5 bis 20 [g/10 min] verwendet.

Die Herstellung der angeschäumten Partikel erfolgt durch Vermischen von Polyolefinpartikeln mit einem Treibmittel in einem Extruder, Homogenisieren der Masse und schließlich Auspressen unter Aufschäumen. Zunächst werden die Polyolefinpartikel in der Einzugszone des Extruders mit einem festen Treibmittel vermischt. Dabei kann feiner Grieß mit Teilchengrößen von 0,01 bis 10 mm, wie er direkt bei der Polymerisation anfällt, eingesetzt werden, oder Granulat mit Teilchengrößen von 0,1 bis 10 mm, wie es bei der Extrusion des Polyolefins anfällt. Geeignete Treibmittel sind Verbindungen, die bei erhöhten Temperaturen Gase abspalten, beispielsweise Azodicarbonamid, Azobisisobutyronitril, Natriumhydrogencarbonat, Natriumcitrat, Dinitrosopentamethylentetramin oder p,p'-Semicarbazid, sowie deren Mischungen. Die Treibmittelmenge richtet sich nach dem angestrebten Schüttgewicht der Schaumstoffteilchen. Sie beträgt bevorzugt 0,2 bis 5 Gew.-Teile, bezogen auf 100 Gew.-Teile Polyolefin. An dieser Stelle können auch übliche Zusatzstoffe in wirksamen Mengen, wie Farbstoffe, Pigmente, Keimbildner, Stabilisatoren, Flammschutzmittel, Gleitmittel und Antistatika zugesetzt werden.

Das Vermischen und Homogenisieren von Polyolefinschmelze und Treibmittel geschieht bei Temperaturen zwischen 180 und 240°C und Verweilzeiten von 60 bis 500 sec. Danach wird die Mischung aus dem Extruder ausgepreßt und zu aufgeschäumten Partikeln mit einem Durchmesser von 0,4 bis 5 mm granuliert. Das Schüttgewicht der angeschäumten Granulate beträgt 120 bis 400, vorzugsweise 150 bis 300 g·l⁻¹.

Es hat sich überraschenderweise gezeigt, daß diese angeschäumten Polyolefinpartikel ohne vorherige Druckbehandlung mit Wasserdampf zu Schaumstoffpartikeln weiter aufgeschäumt werden können, die den sogenannten Doppelpeak aufweisen, wenn man bestimmte Temperatur- und Verweilzeitgrenzen einhält.

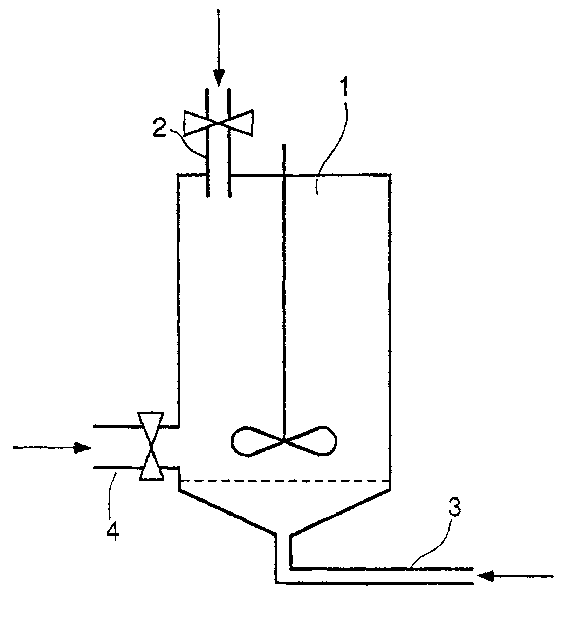

Das Weiterschäumen der angeschäumten Partikel wird zweckmäßigerweise in einem Druckvorschäumer vorgenommen. Die Abbildung zeigt eine schematische Skizze eines solchen Druckvorschäumers (1). Bei (2) werden die angeschäumten Partikel zugeführt, bei (3) wird Dampf eingeleitet. Die aufgeschäumten Partikel werden durch die mit einem Ventil verschließbare Leitung (4) ausgetragen. Dieses Verfahren kann diskontinuierlich und - nach entsprechenden Abwandlungen - auch kontinuierlich durchgeführt werden. Der Wasserdampfdruck liegt je nach benötigter Temperatur zwischen 1,5 und 8,0 bar, was Temperaturen zwischen 110° und 170°C entspricht. Um Schaumstoffpartikel mit Doppelpeak zu erhalten, sollte die Temperatur beim Verschäumen in der Nähe des Schmelzbereichs des jeweiligen Polyolefins liegen, vorzugsweise ± 5°C über bzw. unter der Temperatur des Schmelzmaximums der DSC-Kurve des Polyolefins. Bei den besonders bevorzugten Propylen-Copolymerisaten arbeitet man günstig mit Dampfdrücken von 2,5 bis 5,0 bar; bei Ethylen-Copolymerisaten mit Dampfdrücken von 1,5 bis 3,0 bar. Ist der Dampfdruck und damit die Temperatur zu hoch, dann besteht die Gefahr, daß die Schaumstoffpartikel verkleben oder kollabieren, bei zu niedrigem Dampfdruck ist der Expansionsgrad zu gering. Relativ niedrige Dampfdrücke können durch Verlängerung der Bedampfungsdauer etwas ausgeglichen werden. Diese liegt zwischen 5 und 120 Sek., vorzugsweise zwischen 8 und 60 Sek.. Werden sehr niedrige Schüttdichten angestrebt, dann sollte die Bedampfung mehrere Male, vorzugsweise ein bis vier Mal wiederholt werden, wobei bei jeder Bedampfung die Schüttdichte weiter absinkt. Es ist grundsätzlich nicht notwendig, die angeschäumten Partikel vor der Bedampfung mit Druck zu beladen; wenn man extrem niedrige Schüttdichten erreichen will, kann es jedoch von Vorteil sein, vor der letzten Bedampfung die Schaumstoffpartikel mit Druck zu beladen, z.B. durch mehrstündige Lagerung mit Stickstoff unter Druck (z.B. 2 bis 6 bar).

Die erfindungsgemäß hergestellten Schaumstoffpartikel weisen eine Schüttdichte zwischen 20 und 100, insbesondere zwischen 25 und 60 g·l⁻¹ auf. Sie können nach üblichen Verfahren zu Schaumstoff-Formkörpern verarbeitet werden.

### Beispiel

A: Herstellung des angeschäumten Minigranulats
   Als Ausgangsmaterial wurde ein Ethylen-Propylen-Randomcopolymer mit einem Ethylengehalt von 2,5 % und einem MFI (230,2,16) von ca. 8 g·10 min⁻¹ eingesetzt. Dieser wurde zusammen mit Alterungsschutzmitteln, einem Schwarzpigment und 5000 ppm Azodicarbonamid auf einem ZSK 30-Extruder zu angeschäumten Minigranulaten mit einer Schüttdichte von 340 g·l⁻¹ verarbeitet.
B: Herstellung der Schaumstoffpartikel
   Das angeschäumte Minigranulat nach A wurde in einem Druckvorschäumer 18 sec. mit 3 bar-Dampf bei 143°C auf eine Schüttdichte von 160 g·l⁻¹ nachexpandiert. Nach einer Regenerationsphase von 24 Stunden wurden die getrockneten Schaumstoffpartikel erneut 18 sec. mit 3 bar-Dampf behandelt. Die Schüttdichte der Schaumstoffpartikel sank dabei auf 100 g·l⁻¹ ab. Nach erneuter Regeneration und Trocknung wurde ein Teil der Schaumstoffpartikel 8 sec. mit 3 bar-Dampf behandelt, während der zweite Teil der Schaumstoffpartikel vor der Bedampfung 2 Stunden unter 4 bar Stickstoff gelagert wurde. Die Schüttdichte der Schaumstoffpartikel betrug nach der 3. Bedampfung 90 bzw. 85 g·l⁻¹. Nach Druckbegasung (Lagerung der Schaumstoffpartikel 4 Stunden bei 70°C und 4 bar Stickstoff) betrug die Schüttdichte 80 bzw. 75 g·l⁻¹. Die DSC-Spektren der nach der 1., 2. und 3. Schäumung erhaltenen Schaumstoffpartikel wiesen alle einen Doppelpeak auf.

## Patentansprüche

1. Verfahren zur Herstellung von Polyolefin-Schaumstoffpartikeln mit einer Schüttdichte von 20 bis 100 g·l⁻¹, bei dem man
A. zuerst angeschäumte Partikel mit einer Schüttdichte von 120 bis 400 g·l⁻¹ herstellt durch Extrusion bei Temperaturen zwischen 180 und 240°C und Verweilzeiten von 60 bis 500 sec. und Granulieren des Polyolefins, welches ein festes Treibmittel enthält, das bei erhöhter Temperatur Gas abspaltet, und dann
B. die angeschäumten Partikel in einer oder mehreren Stufen weiter aufschäumt,
**dadurch gekennzeichnet, daß** in Stufe B treibmittelfreie, angeschäumte Partikel mit Wasserdampf von 1,5 bis 8,0 bar und einer Temperatur von 110° bis 170°C 5 bis 120 Sek. lang behandelt werden, und dann entspannt wird.

2. Verfahren zur Herstellung von Polyolefin-Schaumstoffpartikeln nach Anspruch 1, **dadurch gekennzeichnet, daß** die Wasserdampfbehandlung in Stufe B bei einer Temperatur vorgenommen wird, die ± 5°C über bzw. unter der Temperatur des Schmelzmaximums in der DSC-Kurve des jeweiligen Polyolefins liegt.

3. Verfahren zur Herstellung von Polyolefin-Schaumstoffpartikeln nach Anspruch 1, **dadurch gekennzeichnet, daß** die Wasserdampfbehandlung der angeschäumten Partikel ohne vorherige Druckbeladung der Partikel vorgenommen wird.

4. Verfahren zur Herstellung von Polyolefin-Schaumstoffpartikeln nach Anspruch 1, **dadurch gekennzeichnet, daß** die Wasserdampfbehandlung nach Stufe B ein bis vier Mal wiederholt wird.

## Claims

1. A process for producing polyolefin foam particles having a bulk density of from 20 to 100 g·l⁻¹, in which
A. partially foamed particles having a bulk density of from 120 to 400 g·l⁻¹ are first produced by extrusion at from 180 and 240°C and residence times of from 60 to 500 seconds and granulation of the polyolefin which contains a solid blowing agent which liberates gas at elevated temperature, and then
B. the partially foamed particles are further foamed in one or more stages,
wherein, in stage B, partially foamed particles free of blowing agent are treated with steam at from 1.5 to 8.0 bar and from 110° to 170°C for from 5 to 120 seconds, and depressurization is then carried out.

2. A process for producing polyolefin foam particles as claimed in claim 1, wherein the steam treatment in stage B is carried out at a temperature which is ± 5°C above or below the temperature of the melting maximum in the DSC curve of the respective polyolefin.

3. A process for producing polyolefin foam particles as claimed in claim 1, wherein the steam treatment of the partially foamed particles is carried out without prior pressure loading of the particles.

4. A process for producing polyolefin foam particles as claimed in claim 1, wherein the steam treatment according to stage B is repeated from one to four times.

## Revendications

1. Procédé de préparation de particules de mousse de polyoléfine présentant une masse volumique apparente de 20 à 100 g·l⁻¹, dans lequel
A. on prépare tout d'abord des particules expansées ayant une masse volumique apparente de 120 à 400 g·l⁻¹, par extrusion à des températures comprises entre 180 et 240°C et avec des durées de séjour de 60 à 500 secondes et par granulation de la polyoléfine qui contient un agent gonflant solide qui dégage un gaz à température élevée, et ensuite
B. on expanse davantage les particules expansées en une ou plusieurs étapes,
**caractérisé en ce que**, dans l'étape B, les particules expansées, exemptes d'agent gonflant, sont traitées par de la vapeur d'eau à 1,5 jusqu'à 8,0 bars et à une température de 110 à 170°C pendant 5 à 120 secondes, et ensuite on effectue une détente.

2. Procédé de préparation de particules de mousse de polyoléfine suivant la revendication 1, **caractérisé en ce que** le traitement à la vapeur d'eau dans l'étape B est effectué à une température qui se trouve à ± 5°C au-dessus ou en dessous de la température du maximum de fusion dans la courbe DSC de la polyoléfine respective.

3. Procédé de préparation de particules de mousse de polyoléfine suivant la revendication 1, **caractérisé en ce que** le traitement à la vapeur d'eau des particules expansées est effectué sans charge de pression préalable des particules.

4. Procédé de préparation de particules de mousse de polyoléfine suivant la revendication 1, **caractérisé en ce que** le traitement à la vapeur d'eau suivant l'étape B est répété à une jusqu'à quatre reprises.
